# EUROPÄISCHE PATENTSCHRIFT

(11) **EP 2 403 734 B1**
(45) Veröffentlichungstag und Bekanntmachung des Hinweises auf die Patenterteilung: **11.04.2018**
(21) Anmeldenummer: 10708115.0
(22) Anmeldetag: 23.02.2010
(51) Int. Cl.: B60K 28/00, B60L 11/18

(54) **VERFAHREN UND VORRICHTUNG ZUR STEUERUNG EINER FAHRZEUGBEWEGUNGSMÖGLICHKEIT UND/ODER EINER VERSCHLUSSVORRICHTUNG**
METHOD AND DEVICE FOR CONTROLLING A VEHICLE MOVEMENT CAPABILITY AND/OR A CLOSURE DEVICE
PROCÉDÉ ET DISPOSITIF DE COMMANDE D'UNE POSSIBILITÉ DE MOUVEMENT D'UN VÉHICULE ET/OU D'UN DISPOSITIF DE FERMETURE

(30) Priorität: 03.03.2009 DE 102009011088
(43) Veröffentlichungstag der Anmeldung: 11.01.2012
(73) Patentinhaber: Volkswagen Aktiengesellschaft, 38440 Wolfsburg (DE)
(72) Erfinder: VUJASINOVIC, Mirko, 38446 Wolfsburg (DE); ZAWADE, Torsten, 31228 Peine (DE)
(74) Vertreter: Patentanwälte Bressel und Partner mbB
(86) Internationale Anmeldenummer: PCT/EP2010/001216
(87) Internationale Veröffentlichungsnummer: WO 2010/099904

(56) Entgegenhaltungen:
- EP-A1- 1 995 109
- EP-A2- 0 808 980
- US-A1- 2003 062 210
- US-A1- 2008 118 797

## Beschreibung

Die Erfindung betrifft ein Verfahren und eine Vorrichtung zur Steuerung einer Fahrzeugbewegungsmöglichkeit und/oder einer Verschlussvorrichtung.

Das Zuführen externer Zuführeinrichtungen in Fahrzeuge, beispielsweise eines Ladekabels in ein Elektro- oder Hybridfahrzeug, erfolgt über Fahrzeugschnittstellen, beispielsweise Ladebuchsen, die eine Aufnahmevorrichtung für die Zuführeinrichtungen bereitstellen. Die Fahrzeugschnittstellen sind meist durch eine Verschlussvorrichtung, beispielsweise einen Ladebuchsendeckel, geschützt, sodass bei geschlossenem Zustand der Verschlussvorrichtung keine Aufnahme der externen Zuführeinrichtung möglich ist.

Das Laden der Batterie von Elektro- oder Hybridfahrzeugen erfolgt meist über das Zuführen eines Ladekabels in eine Ladebuchse, wobei der Ladebuchsendeckel geöffnet sein muss. Generell besteht beim Laden des Elektro- oder Hybridfahrzeugs über das Zuführen eines Ladekabels in eine Ladebuchse die Gefahr, dass Bewegungen des Fahrzeugs bei zugeführtem Ladekabel zu Schäden am Fahrzeug und/oder an der Ladeeinrichtung führen können. Dies ist insbesondere dann der Fall, wenn das Fahrzeug während des Ladens noch bewegbar ist, insbesondere Wegrollen kann, oder wenn vor dem Wegfahren das Entfernen des Ladekabels vergessen wird.

Aus DE 42 02 075 A1 ist eine Vorrichtung bekannt, die, um ein Wegfahren eines Kraftfahrzeuges ohne Einhängen einer Zapfpistole an einer Zapfsäule und dadurch enstehende Schäden zu vermeiden, eine Verriegelungseinrichtung an der Zapfsäule vorsieht, die mit dem Zündschlüssel des Kraftfahrzeugs betätigbar ist und die im Verriegelungszustand den Betankungsvorgang unterbindet und im Entriegelungszustand den Zündschlüssel festhält.

Aus G 92 11 114 U1 ist eine externe Autoarretierung bekannt, welche die Aufgabe hat, unter Fahrzeugen ausgefahren zu werden, um diese am Wegfahren zu hindern, indem das Fahrzeug schonungsvoll festgehalten wird, bis der betankte Betrag gezahlt wird und der Tankwart bzw. Kassierer das Fahrzeug ohne Zeitverzögerung freigibt.

Aus der US 2003/062210 A ist ein Verfahren zur Steuerung einer Fahrzeugbewegungsmöglichkeit bzw. einer Verbrennungskraftmaschine bekannt, die mindestens eine Fahrzeugschnittstelle zur Aufnahme externer Zufuhreinrichtungen verschließt, wobei eine Aufnahme externer Zufuhreinrichtungen nur bei einer geöffneten Verschlussvorrichtung erfolgen kann, wobei die Fahrzeugbewegungsmöglichkeit die Zustände zulässig und nicht-zulässig kennt, wobei der Zustand der Fahrzeugbewegungsmöglichkeit in Abhängigkeit von mindestens einem Zustand der Verschlussvorrichtung geändert werden kann. Dabei wird der zulässige Zustand der Fahrzeugbewegungsmöglichkeit durch die Aktivierung eines Antriebsstranges (Betrieb der Verbrennungskraftmaschine) bzw. der nicht-zulässige Zustand der Fahrzeugbewegungsmöglichkeit durch die Deaktivierung des Antriebsstranges (Ausschalten der Verbrennungskraftmaschine) realisiert.

Die US 2008/118797 A1 offenbart ein Verfahren zur Steuerung einer Fahrzeugbewegungsmöglichkeit, wobei eine Aufnahme externer Zufuhreinrichtungen nur bei einer geöffneten Verschlussvorrichtung erfolgen kann, wobei die Fahrzeugbewegungsmöglichkeit mindestens die Zustände zulässig und nicht-zulässig kennt, wobei der Zustand der Fahrzeugbewegungsmöglichkeit in Abhängigkeit von mindestens einem Zustand der Verschlussvorrichtung geändert werden kann. Dabei wird der Zustand der Fahrzeugbewegungsmöglichkeit zusätzlich in Abhängigkeit einer Verbindung einer externen Energiequelle und dem Fahrzeug geändert. Dabei offenbart die Druckschrift weiter die Deaktivierung eines Antriebsstranges sowie eine als Bremse ausgebildete Wegfahrsperre zur Realisierung der nicht-zulässigen Fahrzeugbewegungsmöglichkeit.

Aus der EP 1 995 109 A1 ist ein Verfahren zur Steuerung einer Fahrzeugbewegungsmöglichkeit bekannt, mittels einer Verbindungseinheit eines Fahrzeuges und einer weiteren Verbindungseinheit eines Ladegerätes. Dabei wird ein Starten von Einheiten, die eine Fahrzeugbewegung verursachen können, verhindert, wenn ein Ladekabel mit dem Fahrzeug verbunden ist.

Der Erfindung liegt daher das technische Problem zugrunde, ein Verfahren zur Steuerung einer Fahrzeugbewegungsmöglichkeit und/oder einer Verschlussvorrichtung, insbesondere eines Ladebuchsendeckels, sowie eine hierfür geeignete Vorrichtung zu schaffen mittels derer Schäden am Fahrzeug und/oder der Zuführeinrichtung vermieden werden, die durch eine Fahrzeugbewegung während der Zuführung entstehen könnten.

Die Lösung des technischen Problems ergibt sich durch die Gegenstände mit den Merkmalen der Ansprüche 1 und 12. Weitere vorteilhafte Ausgestaltungen der Erfindung ergeben sich aus den Unteransprüchen.

Hierbei erfolgt eine Steuerung einer Fahrzeugbewegungsmöglichkeit und einer Verschlussvorrichtung, die mindestens eine Fahrzeugschnittstelle zur Aufnahme externer Zufuhreinrichtungen verschließt, wobei eine Aufnahme externer Zufuhreinrichtungen nur bei einer geöffneten Verschlussvorrichtung erfolgen kann, wobei die Fahrzeugbewegungsmöglichkeit mindestens die Zustände zulässig und nicht-zulässig kennt, wobei die Verschlussvorrichtung mindestens die Zustände verriegelt ohne Freigabe zur Entriegelung (VOF) und verriegelt mit Freigabe zur Entriegelung (VMF) kennt, wobei der Zustand der Verschlussvorrichtung in Abhängigkeit von mindestens einem Zustand der Fahrzeugbewegungsmöglichkeit und der Zustand der Fahrzeugbewegungsmöglichkeit in Abhängigkeit von mindestens einem Zustand der Verschlussvorrichtung geändert werden kann. Damit wird vorteilhaft erreicht, dass zum Beispiel eine Entriegelung der Verschlussvorrichtung nur dann stattfinden kann, wenn die Bewegungsmöglichkeit des Fahrzeugs nicht zulässig ist. Es wird damit sichergestellt, dass erst wenn sich das Fahrzeug nicht mehr bewegen kann, die Zuführeinrichtung eingeführt werden kann. Kumulativ ist vorgesehen, dass eine Bewegungsmöglichkeit des Fahrzeugs nur dann zugelassen wird, wenn die Verschlussvorrichtung verriegelt ist. Damit wird verhindert, dass sich das Fahrzeug in Bewegung setzt, wenn die Zuführeinrichtung noch nicht entfernt ist.
Beispielhaft bezeichnet die Fahrzeugschnittstelle zur Aufnahme externer Zufuhreinrichtungen eine Schnittstelle zur Aufnahme von Betriebsstoffen, zum Beispiel Kraftstoff und/oder Kühlwasser, und/oder zur Aufnahme von Daten, zum Beispiel Fahrzeugstatusdaten. Weiterhin umfasst eine externe Zuführeinrichtung Einrichtungen, die zur Zuführung von Betriebsstoffen und/oder Daten geeignet sind. Dabei wird, wenn die Fahrzeugbewegungsmöglichkeit in den Zustand zulässig versetzt wird, die Verschlussvorrichtung in den Zustand verriegelt ohne Freigabe zur Entriegelung (VOF) versetzt. Damit wird sichergestellt, dass, wenn eine Fahrzeugbewegung möglich ist oder realisiert werden soll, die Verschlussvorrichtung verriegelt wird und nicht entriegelt werden kann. Insbesondere kann die Fahrzeugschnittstelle bei einem Elektro- oder Hybridfahrzeug eine Ladebuchse zur Zuführung elektrischer Energie darstellen, wobei die Zuführeinrichtung in diesem Fall beispielsweise als Ladekabel mit einem Ladestecker ausgebildet ist.

Beispielhaft ist die Verschlussvorrichtung durch einen Ladebuchsendeckel realisiert, der über einen Riegelmechanismus verfügt und der in Abhängigkeit des Riegelzustands (ver- oder entriegelt) geöffnet oder geschlossen werden kann.

Die Steuerung der Fahrzeugbewegungsmöglichkeit und der Verschlussvorrichtung erfolgt dabei beispielsweise über eine Auswerte- und Steuereinheit,die zum Beispiel eine zentrale Auswerte- und Steuereinheit ist oder die zum Beispiel integrativer Bestandteil einer Einheit zur Steuerung der Fahrzeugbewegung ist. Alternativ erfolgt eine Verteilung der Steuerungslogik auf mindestens zwei Steuer- und Auswerteeinheiten, beispielsweise als integrativer Bestandteil der Verschlussvorrichtung und der Einheit zur Steuerung der Fahrzeugbewegungsmöglichkeit.

In einer bevorzugten Ausführungsform sind der zulässige Zustand der Fahrzeugbewegungsmöglichkeit durch die Deaktivierung einer Wegfahrsperre und/oder durch die Aktivierung eines Antriebsstrangs und der nicht-zulässige Zustand der Fahrzeugbewegungsmöglichkeit durch die Aktivierung einer Wegfahrsperre und/oder durch die Deaktivierung des Antriebsstrangs realisiert. Ein Vorteil dieser Ausführungsform ist die Realisierung der Zustände der Fahrzeugbewegungsmöglichkeit über, bei einem Fahrzeug in der Regel bereits vorhandene, Funktionen, sodass keine zusätzlichen Elemente zur Steuerung der Zustände der Fahrzeugbewegungsmöglichkeit eingeführt werden müssen.

In einer weiteren bevorzugten Ausführungsform sind die Aktivierung der Wegfahrsperre durch das Aktivieren einer Park- bzw. Feststellbremse und/oder durch das Einstellen einer Wählhebelstellung, die mindestens die Zustände Parken und Nicht-Parken kennt, auf den Zustand Parken und die Deaktivierung der Wegfahrsperre durch das Deaktivieren einer Park- bzw. Feststellbremse und/oder durch das Einstellen der Wählhebelstellung auf den Zustand Nicht-Parken realisiert. Insbesondere ist die Park- bzw. Feststellbremse durch eine elektrische Park- bzw. Feststellbremse realisiert. Weiterhin bezeichnet die Wählhebelstellung eine Schnittstelle zur Fahrzeugbedienung, mittels derer ein gewünschter Zustand des Fahrzeugs, zum Beispiel Parken, ausgewählt werden kann. Vorteilhaft bei dieser Ausführungsform ist die Steuerung der Wegfahrsperre über, bei einem Fahrzeug in der Regel bereits, vorhandene Funktionen, sodass keine zusätzlichen Elemente zur Aktivierung oder Deaktivierung der Wegfahrsperre eingeführt werden müssen.

In einer weiteren bevorzugten Ausführungsform wird, wenn die Fahrzeugbewegungsmöglichkeit in den Zustand nicht-zulässig versetzt wird, die Verschlussvorrichtung in den Zustand verriegelt mit Freigabe zur Entriegelung (VMF) versetzt. Hiermit wird vorteilhaft ermöglicht, dass die Verschlussvorrichtung nur entriegelt werden kann, wenn eine Fahrzeugbewegung nicht (mehr) zulässig ist. Ist die Verschlussvorrichtung in einem Anfangszustand verriegelt, so kann sie nur entriegelt werden, wenn das Fahrzeug sich nicht mehr bewegen kann.

In einer weiteren bevorzugten Ausführungsform kennt die Verschlussvorrichtung weiterhin den Zustand entriegelt mit Freigabe zur Verriegelung (EMF), wobei die Verschlussvorrichtung nur aus dem Zustand verriegelt mit Freigabe zur Entriegelung (VMF) in den Zustand entriegelt mit Freigabe zur Verriegelung (EMF) versetzt werden kann. Hiermit wird vorteilhaft sichergestellt, dass eine Entriegelung der Verschlussvorrichtung nur aus einem Zustand heraus möglich ist, in welchem keine Fahrzeugbewegungsmöglichkeit zulässig ist. Weiterhin wird sichergestellt, dass aus diesem Zustand heraus eine Verriegelung zulässig ist.

In einer weiteren Ausführungsform erfolgt, wenn die Verschlussvorrichtung den Zustand verriegelt mit Freigabe zur Entriegelung (VMF) einnimmt, die Versetzung der Verschlussvorrichtung in den Zustand entriegelt mit Freigabe zur Verriegelung (EMF) durch ein Signal zur Entriegelung der Verschlussvorrichtung, wobei das Signal zur Entriegelung der Verschlussvorrichtung durch die Bedienung eines Entriegelungssignalgebers oder durch ein Entriegelungssignal einer Zentralverriegelungseinheit des Fahrzeugs erzeugt wird. Hiermit wird vorteilhaft sichergestellt, dass eine Entriegelung der Verschlussvorrichtung aus einem hierfür zulässigen Zustand heraus auf ein explizites Signal, zum Beispiel einen Tastendruck durch den Fahrzeugbediener, erfolgt oder mit der üblicherweise vorhandenen Funktion einer Zentralverriegelung kombiniert wird. Dabei kann vorgesehen sein, dass, wenn beide Arten zur Erzeugung des Signals zur Entriegelung der Verschlussvorrichtung möglich sind, die Auswahl des Entriegelungssignals nutzerindividuell programmierbar ist.

In einer weiteren Ausführungsform wird, wenn die Verschlussvorrichtung den Zustand entriegelt mit Freigabe zur Verriegelung (EMF) einnimmt und die Fahrzeugbewegungsmöglichkeit in den Zustand zulässig versetzt wird, die Verschlussvorrichtung in den Zustand verriegelt ohne Freigabe zur Entriegelung (VOF) versetzt. Hiermit wird vorteilhaft sichergestellt, dass die Verschlussvorrichtung bei einer zulässigen Fahrzeugbewegungsmöglichkeit verriegelt ist und nicht entriegelt werden kann.

In einer weiteren bevorzugten Ausführungsform erfolgt, wenn die Verschlussvorrichtung den Zustand entriegelt mit Freigabe zur Verriegelung (EMF) einnimmt, die Versetzung der Verschlussvorrichtung in den Zustand verriegelt mit Freigabe zur Entriegelung (VMF) durch ein Signal zur Verriegelung der Verschlussvorrichtung, wobei das Signal zur Verriegelung der Verschlussvorrichtung durch die Bedienung eines Verriegelungssignalgebers oder durch ein Signal der Zentralverriegelungseinheit des Fahrzeugs erzeugt wird, wobei das Signal zur Verriegelung der Verschlussvorrichtung durch die Zentralverriegelungseinheit auch verzögert mit einem definierten Zeitinterval erzeugt werden kann. Hiermit kann sichergestellt werden, dass der Fahrzeugbediener nach Aktivierung der Zentralverriegelung die Verschlussvorrichtung noch innerhalb des definierten Zeitintervals öffnen kann. Somit kann die Zufuhr einer externen Zufuhreinrichtung, zum Beispiel eines Ladekabels, auch bei verschlossenem Fahrzeuginnenraum realisiert werden.

In einer bevorzugten Ausführungsform kennt die Verschlussvorrichtung weiterhin den Zustand entriegelt ohne Freigabe zur Verriegelung (EOF), wobei die Verschiussvorrichtung nur aus dem Zustand entriegelt mit Freigabe zur Verriegelung (EMF) in den Zustand entriegelt ohne Freigabe zur Verriegelung (EOF) versetzt werden kann und wobei, wenn die Verschlussvorrichtung den Zustand entriegelt ohne Freigabe zur Verriegelung (EOF) einnimmt, die Versetzung der Fahrzeugbewegungsmöglichkeit in den Zustand zulässig nicht möglich ist.

In einer weiteren bevorzugten Ausführungsform erfolgt, wenn die Verschlussvorrichtung den Zustand entriegelt mit Freigabe zur Verriegelung (EMF) einnimmt, die Versetzung der Verschlussvorrichtung in den Zustand entriegelt ohne Freigabe zur Verriegelung (EOF) durch das Öffnen der Verschlussvorrichtung, wobei das Öffnen der Verschlussvorrichtung über ein Verschlussvorrichtungssensor erfasst und mitgeteilt wird, der mindestens den Zustand offen erkennt. Hiermit wird vorteilhaft sichergestellt, dass bei geöffneter Verschlussvorrichtung, wodurch keine Verriegelung der Verschlussvorrichtung möglich ist, auch keine Fahrzeugbewegung zulässig ist.

In einer weiteren bevorzugten Ausführungsform erfolgt, wenn die Verschlussvorrichtung den Zustand entriegelt ohne Freigabe zur Verriegelung (EOF) einnimmt, die Versetzung der Verschlussvorrichtung in den Zustand entriegelt mit Freigabe zur Verriegelung (EMF) durch das Schließen der Verschlussvorrichtung, wobei das Schließen der Verschlussvorrichtung über ein Verschlussvorrichtungssensor erfasst und mitgeteilt wird, der mindestens den Zustand offen erkennt. Hiermit wird vorteilhaft sichergestellt, dass eine Fahrzeugbewegung oder eine Verriegelung der Verschlussvorrichtung erst dann möglich ist, wenn die Verschlussvorrichtung geschlossen ist.

Zur Durchführung der Steuerung einer Fahrzeugbewegungsmöglichkeit und/oder einer Verschlussvorrichtung, die mindestens eine Fahrzeugschnittstelle zur Aufnahme externer Zufuhreinrichtungen verschließt, wobei eine Aufnahme externer Zufuhreinrichtungen nur bei einer geöffneten Verschlussvorrichtung erfolgen kann, wobei die Fahrzeugbewegungsmöglichkeit mindestens die Zustände zulässig und nicht-zulässig kennt, wobei die Verschlussvorrichtung mindestens die Zustände verriegelt ohne Freigabe zur Entriegelung (VOF) und verriegelt mit Freigabe zur Entriegelung (VMF) kennt, wobei der Zustand der Verschlussvorrichtung in Abhängigkeit von mindestens einem Zustand der Fahrzeugbewegungsmöglichkeit und/oder der Zustand der Fahrzeugbewegungsmöglichkeit in Abhängigkeit von mindestens einem Zustand der Verschlussvorrichtung geändert werden kann, umfasst eine Vorrichtung mindestens eine steuerbare Verschlussvorrichtung, die mindestens einen Riegelmechanismus eines Verschlusses bedient, und mindestens eine Einheit zur Steuerung der Fahrzeugbewegungsmöglichkeit, wobei die Verschlussvorrichtung und die Einheit zur Steuerung der Fahrzeugbewegungsmöglichkeit datentechnisch verbunden sind.

Hinsichtlich weiterer vorteilhafter Ausgestaltungen der Vorrichtung wird auf die vorangegangenen Ausführungen zum Verfahren der Steuerung Bezug genommen.

Die Erfindung wird nachfolgend anhand eines bevorzugten Ausführungsbeispiels näher erläutert. Die Figuren zeigen:
Fig.1 ein schematisches Blockschaltbild einer Vorrichtung zur Steuerung einer Fahrzeugbewegungsmöglichkeit und/oder einer Verschlussvorrichtung und
Fig. 2 ein Zustandsabfolgediagramm zur Steuerung einer Fahrzeugbewegungsmöglichkeit und einer Verschlussvorrichtung.

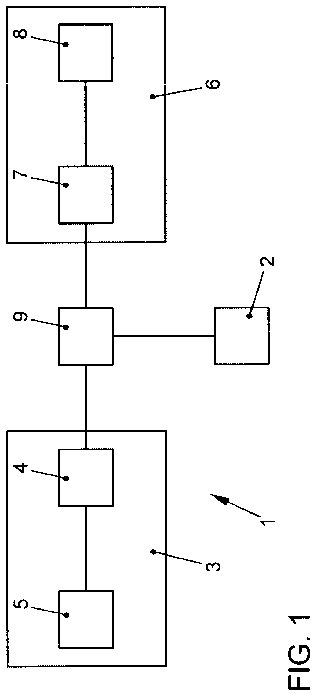

In Fig. 1 ist ein Blockschaltbild einer Vorrichtung 1 zur Steuerung einer Fahrzeugbewegungsmöglichkeit und einer Verschlussvorrichtung 2 dargestellt. Die Vorrichtung 1 verfügt über eine Verschlussvorrichtung 2, die eine nicht dargestellte Fahrzeugschnittstelle zur Aufnahme externer Zufuhreinrichtungen verschließt, wobei eine Aufnahme externer Zufuhreinrichtungen nur bei einer geöffneten Verschlussvorrichtung 2 erfolgen kann. Insbesondere ist die Verschlussvorrichtung 2 mit einem Riegelmechanismus ausgestattet, der eine Ver- und Entriegelung der Verschlussvorrichtung zulässt. Beispielsweise ist die Verschlussvorrichtung 2 ein Ladebuchsendeckel, der eine Ladebuchse eines Elektro- oder Hybridfahrzeugs verschließt, sodass im verschlossenen Zustand des Ladebuchsendeckels kein Ladekabel zugeführt werden kann. Der Riegelmechanismus umfasst beispielsweise Metallstifte, die mit Hilfe einer steuerbaren Aktorik aus dem Ladebuchsendeckel in dafür vorgesehene Buchsen der Fahrzeugkarosserie hinein- und herausgeführt werden können, wobei die Metallstifte im hineingeführten Zustand die Ladebuchse verriegeln und im hinausgeführten Zustand entriegeln.

Die Vorrichtung umfasst weiterhin eine Einheit 3 zur Steuerung der Fahrzeugbewegungsmöglichkeit, die eine Wegfahrsperre 4 und eine Eingabeeinheit 5 umfasst, wobei die Wegfahrsperre 4 beispielsweise als elektrische Park- bzw. Feststellbremse ausgebildet ist. Alternativ oder kumulativ ist die Wegfahrsperre 4 als Unterbrechung eines Antriebsstrangs ausgebildet. Die Eingabeeinheit 5 für die Wegfahrsperre 4 ist beispielweise als Hebel oder als Taster ausgebildet. Weiterhin umfasst die Vorrichtung 1 zur Steuerung einer Fahrzeugbewegungsmöglichkeit und/oder einer Verschlussvorrichtung 2 Zentralverrieglungseinheit 6, die einen Zentral-verriegelungsmechanismus 7 und eine Eingabeeinheit 8 für den Zentralverriegelungs-mechanismus 7 enthält. Die Eingabeeinheit 8 ist beispielsweise durch sensorgestützte Fahrzeugtürschlösser und/oder eine Funkbedienung der Fahrzeugtürschlösser realisiert.

Des Weiteren umfasst die Vorrichtung 1 eine zentrale Steuer- und Auswerteeinheit 9, die Informationen der Verschlussvorrichtung 2, der Einheit 3 zur Steuerung der Fahrzeugbewegungsmöglichkeit und der Zentralverrieglungseinheit 6 erhält, auswertet und die Zustände der Verschlussvorrichtung 2 und der Einheit 3 zur Steuerung der Fahrzeugbewegungsmöglichkeit steuert. Beispielsweise kann die zentrale Auswerte- und Steuereinheit 9 in mindestens eine vorhandene Fahrzeugsteuereinheit bzw. ein vorhandenes Steuergerät integriert werden. Die zentrale Steuer- und Auswerteeinheit 9, die Verschlussvorrichtung 2, die Einheit 3 zur Steuerung der Fahrzeugbewegungsmöglichkeit und die Zentralverrieglungseinheit 6 sind miteinander datentechnisch verbunden.

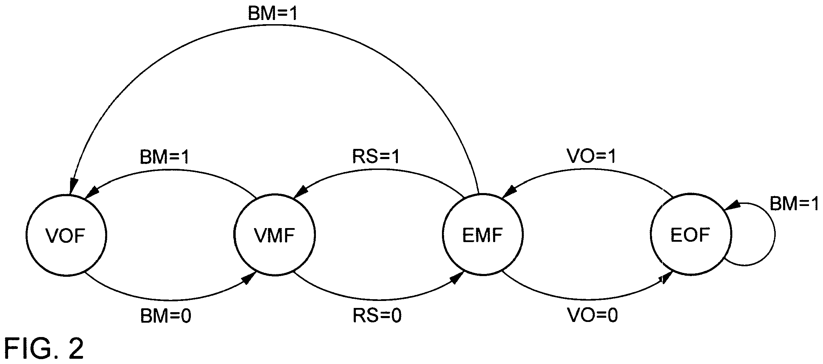

In Fig. 2 sind vier Zustände der Steuerung einer Fahrzeugbewegungsmöglichkeit und/oder einer Verschlussvorrichtung dargestellt. Hierbei bezeichnet VOF den Zustand verriegelt ohne Freigabe zur Entriegelung der Verschlussvorrichtung, VMF den Zustand verriegelt mit Freigabe zur Entriegelung, EMF den Zustand entriegelt mit Freigabe zur Verriegelung und EOF den Zustand entriegelt ohne Freigabe zur Verriegelung.
Im Zustand verriegelt ohne Freigabe zur Entriegelung VOF ist es nicht möglich, die Verschlussvorrichtung 2 zu entriegeln oder zu öffnen. Insbesondere ist hier der Ladebuchsendeckel geschlossen, die Metallstifte sind in die entsprechenden Buchsen der Fahrzeugkarosserie eingeführt und ein Signal zur Entriegelung der Ladebuchse wird nicht ausgeführt. Die Verschlussvorrichtung 2 geht vom Zustand verriegelt ohne Freigabe zur Entriegelung VOF in den Zustand verriegelt mit Freigabe zur Entriegelung VMF über, wenn die Bewegungsmöglichkeit des Fahrzeugs in den nicht-zulässigen Zustand versetzt wird (BM=0). Dies kann beispielsweise durch das Aktivieren der elektrischen Park- bzw.

### Feststellbremse erfolgen.

Im Zustand verriegelt mit Freigabe zur Entriegelung VMF ist es möglich, die Verschiussvornchtung 2 zu entriegeln, es ist jedoch nicht möglich, sie zu öffnen. Wird im Zustand verriegelt mit Freigabe zur Entriegelung VMF die Bewegungsmöglichkeit des Fahrzeugs in den Zustand zulässig (BM=1) versetzt, dann wird die Verschlussvorrichtung 2 in den Zustand verriegelt ohne Freigabe zur Entriegelung VOF versetzt. Wird im Zustand verriegelt mit Freigabe zur Entriegelung VMF ein Signal zur Entriegelung der Verschlussvorrichtung 2 (RS=0) gegeben, so wird die Verschlussvorrichtung 2 in den Zustand entriegelt mit Freigabe zur Verriegelung EMF versetzt. Das Geben eines Signals zur Entriegelung der Verschlussvorrichtung (RS=0) kann dabei insbesondere über die Betätigung eines speziellen Tasters oder die Aktivierung einer Funktion im Fahrzeugbedienmenü realisiert sein. Eine alternative Ausführungsform gibt ein Signal zur Entriegelung der Verschlussvorrichtung (RS=0), wenn der Zentralverrieglungsmechanismus 7 über eine Eingabeeinheit 8 ein Signal zur Entriegelung erhält.

Im Zustand entriegelt mit Freigabe zur Verriegelung EMF ist das Öffnen der Verschlussvorrichtung 2 oder die Verriegelung der Verschlussvorrichtung 2 möglich. Wird im Zustand entriegelt mit Freigabe zur Verriegelung EMF die Bewegungsmöglichkeit des Fahrzeugs, beispielsweise durch das Lösen der elektrischen Park- bzw. Feststellbremse in den Zustand zulässig (BM=1) versetzt, dann wird die Verschlussvorrichtung 2 in den Zustand verriegelt ohne Freigabe VOF versetzt. Damit wird sichergestellt, dass die Verschlussvorrichtung 2 nicht mehr geöffnet werden kann, wenn das Fahrzeug bewegt werden kann. Wird im Zustand entriegelt mit Freigabe zur Verriegelung EMF ein Signal zur Verriegelung der Verschlussvorrichtung 2 (RS=1) gegeben, so wird die Verschlussvorrichtung 2 in den Zustand verriegelt mit Freigabe zur Entriegelung VMF versetzt. Analog zum Entriegelungsvorgang kann das Geben eines Signals zur Verriegelung der Verschlussvorrichtung 2 (RS=1) insbesondere über die Betätigung eines speziellen Tasters oder die Aktivierung einer Funktion im Fahrzeugbedienmenü realisiert sein. Eine alternative Ausführungsform gibt ein Signal zur Verriegelung der Verschlussvorrichtung 2 (RS=1), wenn der Zentralverrieglungsmechanismus 7 über die Eingabeeinheit 8 ein Signal zur Verrieglung erhält.

Wird im Zustand entriegelt mit Freigabe zur Verriegelung EMF die Verschlussvorrichtung 2 geöffnet (VO=0), so wird die Verschlussvorrichtung 2 in den Zustand entriegelt ohne Freigabe zur Verriegelung EOF versetzt. Insbesondere ist hierbei der Ladenbuchsendeckel offen und gibt die Ladebuchse frei. Im Zustand entriegelt ohne Freigabe zur Verriegelung EOF ist es nicht möglich, die Verschlussvorrichtung 2 zu verriegeln, es ist jedoch möglich, sie zu schließen. Wird im Zustand entriegelt ohne Freigabe zur Verriegelung EOF die Verschlussvorrichtung 2 geschlossen, so wird die Verschlussvorrichtung 2 in den Zustand entriegelt mit Freigabe zur Verriegelung EMF versetzt. Im Zustand entriegelt ohne Freigabe zur Verriegelung EOF ist es nicht möglich, die Bewegungsmöglichkeit des Fahrzeugs in den Zustand zulässig (BM=1) zu versetzen. Bei geöffnetem Ladebuchsendeckel ist es insbesondere nicht möglich, die elektrische Park- bzw. Feststellbremse zu lösen.

Die Abfolge und Zulässigkeit der Zustände garantiert somit, dass eine Öffnung des Ladebuchsendeckels zur Zuführung eines Ladekabels nur bei einem Fahrzeug möglich ist, welches sich nicht bewegen kann (Steuerung der Verschlussvorrichtung). Die Abfolge und Zulässigkeit der Zustände garantiert auch, dass ein Fahrzeug sich nur bewegen kann, wenn der Ladebuchsendeckei geschlossen und verriegelt ist, wobei in einem geschlossenen Zustand des Ladebuchsendeckels kein Ladekabel zugeführt werden kann oder zugeführt ist (Steuerung der Fahrzeugbewegungsmöglichkeit).

### Bezugszeichenliste

- VOF: Zustand verriegelt ohne Freigabe zur Entriegelung
- VMF: Zustand verriegelt mit Freigabe zur Entriegelung
- EMF: Zustand entriegelt mit Freigabe zur Verriegelung
- EOF: Zustand entriegelt ohne Freigabe zur Verriegelung

- 1: Vorrichtung
- 2: Verschlussvorrichtung
- 3: Einheit
- 4: Wegfahrsperre
- 5: Eingabeeinheit
- 6: Zentralverrieglungseinheit
- 7: Zentralverriegelungsmechanismus
- 8: Eingabeeinheit
- 9: Auswerte- und Steuereinheit

## Patentansprüche

1. Verfahren zur Steuerung einer Fahrzeugbewegungsmöglichkeit und einer Verschlussvorrichtung (2), die mindestens eine Fahrzeugschnittstelle zur Aufnahme externer Zufuhreinrichtungen verschließt, wobei eine Aufnahme externer Zufuhreinrichtungen nur bei einer geöffneten Verschlussvorrichtung (2) erfolgen kann, wobei die Fahrzeugbewegungsmöglichkeit mindestens die Zustände zulässig und nicht-zulässig kennt, wobei die Verschlussvorrichtung (2) mindestens die Zustände verriegelt ohne Freigabe zur Entriegelung (VOF) und verriegelt mit Freigabe zur Entriegelung (VMF) kennt, wobei der Zustand der Verschlussvorrichtung (2) in Abhängigkeit von mindestens einem Zustand der Fahrzeugbewegungsmöglichkeit und der Zustand der Fahrzeugbewegungsmöglichkeit in Abhängigkeit von mindestens einem Zustand der Verschlussvorrichtung (2) geändert werden kann, wobei wenn die Fahrzeugbewegungsmöglichkeit in den Zustand zulässig versetzt wird, die Verschlussvorrichtung (2) in den Zustand verriegelt ohne Freigabe zur Entriegelung (VOF) versetzt wird.

2. Verfahren nach Anspruch 1, **dadurch gekennzeichnet, dass** der zulässige Zustand der Fahrzeugbewegungsmöglichkeit durch die Deaktivierung einer Wegfahrsperre (4) und/oder durch die Aktivierung eines Antriebsstrangs und der nicht-zulässige Zustand der Fahrzeugbewegungsmöglichkeit durch die Aktivierung einer Wegfahrsperre (4) und/oder durch die Deaktivierung des Antriebsstrangs realisiert sind.

3. Verfahren nach Anspruch 2, **dadurch gekennzeichnet, dass** die Aktivierung der Wegfahrsperre (4) durch das Aktivieren einer Park- bzw. Feststellbremse und/oder durch das Einstellen einer Wählhebelstellung, die mindestens die Zustände Parken und Nicht-Parken kennt, auf den Zustand Parken und die Deaktivierung der Wegfahrsperre (4) durch das Deaktivieren einer Park- bzw. Feststellbremse und/oder durch das Einstellen der Wählhebelstellung auf den Zustand Nicht-Parken erfolgt.

4. Verfahren nach einem der vorangegangenen Ansprüche, **dadurch gekennzeichnet, dass**, wenn die Fahrzeugbewegungsmöglichkeit in den Zustand nicht-zulässig versetzt wird, die Verschlussvorrichtung (2) in den Zustand verriegelt mit Freigabe zur Entriegelung (VMF) versetzt wird.

5. Verfahren nach einem der vorangegangenen Ansprüche, **dadurch gekennzeichnet, dass** die Verschlussvorrichtung (2) weiterhin den Zustand entriegelt mit Freigabe zur Verriegelung (EMF) kennt, wobei die Verschlussvorrichtung (2) nur aus dem Zustand verriegelt mit Freigabe zur Entriegelung (VMF) in den Zustand entriegelt mit Freigabe zur Verriegelung (EMF) versetzt werden kann.

6. Verfahren nach Anspruch 5, **dadurch gekennzeichnet, dass**, wenn die Verschlussvorrichtung (2) den Zustand verriegelt mit Freigabe zur Entriegelung (VMF) einnimmt, die Versetzung der Verschlussvorrichtung (2) in den Zustand entriegelt mit Freigabe zur Verriegelung (EMF) durch ein Signal zur Entriegelung der Verschlussvorrichtung (2) erfolgt, wobei das Signal zur Entriegelung der Verschlussvorrichtung (2) durch die Bedienung eines Entriegelungssignalgebers oder durch ein Entriegelungssignal einer Zentralverriegelungseinheit (6) des Fahrzeugs erzeugt wird.

7. Verfahren nach einem der Ansprüche 5 oder 6, **dadurch gekennzeichnet, dass**, wenn die Verschlussvorrichtung (2) den Zustand entriegelt mit Freigabe zur Verriegelung (EMF) einnimmt und die Fahrzeugbewegungsmöglichkeit in den Zustand zulässig versetzt wird, die Verschlussvorrichtung (2) in den Zustand verriegelt ohne Freigabe zur Entriegelung (VOF) versetzt wird.

8. Verfahren nach einem der Ansprüche 5 bis 7, **dadurch gekennzeichnet, dass**, wenn die Verschlussvorrichtung (2) den Zustand entriegelt mit Freigabe zur Verriegelung (EMF) einnimmt, die Versetzung der Verschlussvorrichtung (2) in den Zustand verriegelt mit Freigabe zur Entriegelung (VMF) durch ein Signal zur Verriegelung der Verschlussvorrichtung (2) erfolgt, wobei das Signal zur Verriegelung der Verschlussvorrichtung (2) durch die Bedienung eines Verriegelungssignalgebers oder durch ein Verriegelungssignal einer Zentralverriegelungseinheit (6) des Fahrzeugs erzeugt wird, wobei das Signal zur Verriegelung der Verschlussvorrichtung durch die Zentralverriegelungseinheit (6) auch verzögert mit einem definierten Zeitinterval erzeugt werden kann.

9. Verfahren nach einem der Ansprüche 5 bis 8, **dadurch gekennzeichnet, dass** die Verschlussvorrichtung (2) weiterhin den Zustand entriegelt ohne Freigabe zur Verriegelung (EOF) kennt, wobei die Verschlussvorrichtung (2) nur aus dem Zustand entriegelt mit Freigabe zur Verriegelung (EMF) in den Zustand entriegelt ohne Freigabe zur Verriegelung (EOF) versetzt werden kann und dass, wenn die Verschlussvorrichtung (2) den Zustand entriegelt ohne Freigabe zur Verriegelung (EOF) einnimmt, die Versetzung der Fahrzeugbewegungsmöglichkeit in den Zustand zulässig nicht möglich ist.

10. Verfahren nach Anspruch 9, **dadurch gekennzeichnet, dass**, wenn die Verschlussvorrichtung (2) den Zustand entriegelt mit Freigabe zur Verriegelung (EMF) einnimmt, die Versetzung der Verschlussvorrichtung (2) in den Zustand entriegelt ohne Freigabe zur Verriegelung (EOF) durch das Öffnen der Verschlussvorrichtung (2) erfolgt, wobei das Öffnen der Verschlussvorrichtung (2) über ein Verschlussvorrichtungssensor erfasst und mitgeteilt wird, der mindestens den Zustand offen erkennt.

11. Verfahren nach einem der Ansprüche 9 oder 10, **dadurch gekennzeichnet, dass**, wenn die Verschlussvorrichtung (2) den Zustand entriegelt ohne Freigabe zur Verriegelung (EOF) einnimmt, die Versetzung der Verschlussvorrichtung (2) in den Zustand entriegelt mit Freigabe zur Verriegelung (EMF) durch das Schließen der Verschlussvorrichtung (2) erfolgt, wobei das Schließen der Verschlussvorrichtung (2) über ein Verschlussvorrichtungssensor erfasst und mitgeteilt wird, der mindestens den Zustand offen erkennt.

12. Vorrichtung zur Steuerung einer Fahrzeugbewegungsmöglichkeit und/oder einer Verschlussvorrichtung (2), die mindestens eine Fahrzeugschnittstelle zur Aufnahme externer Zufuhreinrichtungen verschließt, wobei eine Aufnahme externer Zufuhreinrichtungen nur bei einer geöffneten Verschlussvorrichtung (2) erfolgen kann, wobei die Fahrzeugbewegungsmöglichkeit mindestens die Zustände zulässig und nicht-zulässig kennt, wobei die Verschlussvorrichtung (2) mindestens die Zustände verriegelt ohne Freigabe zur Entriegelung (VOF) und verriegelt mit Freigabe zur Entriegelung (VMF) kennt, wobei der Zustand der Verschlussvorrichtung (2) in Abhängigkeit von mindestens einem Zustand der Fahrzeugbewegungsmöglichkeit und/oder der Zustand der Fahrzeugbewegungsmöglichkeit in Abhängigkeit von mindestens einem Zustand der Verschlussvorrichtung (2) geändert werden kann, umfassend mindestens eine steuerbare Verschlussvorrichtung (2), die mindestens einen Riegelmechanismus eines Verschlusses bedient, und mindestens eine Einheit (3) zur Steuerung der Fahrzeugbewegungsmöglichkeit, wobei die Einheit (3) und die Verschlussvorrichtung (2) datentechnisch verbunden sind, wobei wenn die Fahrzeugbewegungsmöglichkeit in den Zustand zulässig versetzt wird, die Verschlussvorrichtung (2) in den Zustand verriegelt ohne Freigabe zur Entriegelung (VOF) versetzt wird.

## Claims

1. Method for controlling a vehicle movement capability and a closure device (2) which closes at least one vehicle interface for receiving external feed devices, wherein external feed devices can be received only when a closure device (2) is open, wherein the vehicle movement capability has at least the states of admissible and inadmissible, in which the closure device (2) has at least the states of locked without unlocking enabled (VOF) and locked with unlocking enabled (VMF), wherein the state of the closure device (2) can be changed as a function of at least one state of the vehicle movement capability, and the state of the vehicle movement capability can be changed as a function of at least one state of the closure device (2), wherein, if the vehicle movement capability is adjusted to the admissible state, the closure device (2) is adjusted to the state of locked without unlocking enabled (VOF).

2. Method according to Claim 1, **characterized in that** the admissible state of the vehicle movement capability is implemented by deactivation of an immobilizer (4) and/or by activation of a drive train, and the inadmissible state of the vehicle movement capability is implemented by activation of an immobilizer (4) and/or by deactivation of the drive train.

3. Method according to Claim 2, **characterized in that** the immobilizer (4) is activated by activation of a parking brake and/or by adjustment of a selector lever position, which has at least the states of parked and not parked, to the state of parked, and the immobilizer (4) is deactivated by deactivation of a parking brake and/or by adjustment of the selector lever position to the state of not parked.

4. Method according to one of the preceding claims, **characterized in that** if the vehicle movement capability is adjusted to the inadmissible state, the closure device (2) is adjusted to the state of locked with unlocking enabled (VMF).

5. Method according to one of the preceding claims, **characterized in that** the closure device (2) also has the state of unlocked with locking enabled (EMF), wherein the closure device (2) can only be adjusted from the state of locked with unlocking enabled (VMF) to the state of unlocked with locking enabled (EMF).

6. Method according to Claim 5, **characterized in that**, if the closure device (2) assumes the state of locked with unlocking enabled (VMF), the adjustment of the closure device (2) to the state of unlocked with locking enabled (EMF) is carried out by means of a signal for unlocking the closure device (2), wherein the signal for unlocking the closure device (2) is generated by operating an unlocking signal generator or by an unlocking signal from a central locking unit (6) of the vehicle.

7. Method according to one of Claims 5 or 6, **characterized in that**, if the closure device (2) assumes the state of unlocked with locking enabled (EMF) and the vehicle movement capability is adjusted to the admissible state, the closure device (2) is adjusted to the state of locked without unlocking enabled (VOF).

8. Method according to one of Claims 5 to 7, **characterized in that**, if the closure device (2) assumes the state of unlocked with locking enabled (EMF), the closure device (2) is adjusted to the state of locked with unlocking enabled (VMF) by means of a signal for locking the closure device (2), wherein the signal for locking the closure device (2) is generated by the operation of a locking signal generator or by a locking signal from a central locking unit (6) of the vehicle, wherein the signal for locking the closure device can also be generated by the central locking unit (6) after a delay of a defined time interval.

9. Method according to one of Claims 5 to 8, **characterized in that** the closure device (2) also has the state of unlocked without locking enabled (EOF), wherein the closure device (2) can only be adjusted from the state of unlocked with locking enabled (EMF) to the state of unlocked without locking enabled (EOF), and **in that**, if the closure device (2) assumes the state of unlocked without locking enabled (EOF), the adjustment of the vehicle movement capability to the admissible state is not possible.

10. Method according to Claim 9, **characterized in that**, if the closure device (2) assumes the state of unlocked with locking enabled (EMF), adjustment of the closure device (2) to the state of unlocked without locking enabled (EOF) is carried out by opening the closure device (2), wherein the opening of the closure device (2) is sensed and communicated by means of a closure device sensor which detects at least the open state.

11. Method according to one of Claims 9 or 10, **characterized in that**, if the closure device (2) assumes the state of unlocked without locking enabled (EOF), adjustment of the closure device (2) to the state of unlocked with locking enabled (EMF) is carried out by closing the closure device (2), wherein the closing of the closure device (2) is sensed and communicated by means of a closure device sensor which detects at least the open state.

12. Device for controlling a vehicle movement capability and/or a closure device (2) which closes at least one vehicle interface for receiving external feed devices, wherein external feed devices can be received only when a closure device (2) is open, wherein the vehicle movement capability has at least the states of admissible and inadmissible, in which the closure device (2) has at least the states of locked without unlocking enabled (VOF) and locked with unlocking enabled (VMF), wherein the state of the closure device (2) can be changed as a function of at least one state of the vehicle movement capability, and/or the state of the vehicle movement capability can be changed as a function of at least one state of the closure device (2), comprising at least one controllable closure device (2) which operates at least one lock mechanism of a closure, and at least one unit (3) for controlling the vehicle movement capability, wherein the unit (3) and the closure device (2) are connected by data technology, wherein, if the vehicle movement capability is adjusted to the admissible state, the closure device (2) is adjusted to the state of locked without unlocking enabled (VOF).

## Revendications

1. Procédé de commande d'une possibilité de mouvement d'un véhicule et d'un dispositif de fermeture (2) qui ferme au moins une interface du véhicule servant à la réception de dispositifs d'alimentation externes, dans lequel une réception de dispositifs d'alimentation externes n'est possible que lorsque le dispositif de fermeture (2) est ouvert, dans lequel la possibilité de mouvement du véhicule peut prendre au moins les états autorisé et non autorisé, dans lequel le dispositif de fermeture (2) peut prendre au moins les états verrouillé sans possibilité de déverrouillage (VOF) et verrouillé avec possibilité de déverrouillage (VMF), dans lequel l'état du dispositif de fermeture (2) peut être modifié en fonction d'au moins un état de la possibilité de mouvement du véhicule et l'état de la possibilité de mouvement du véhicule peut être modifié en fonction d'au moins un état du dispositif de fermeture (2), dans lequel le dispositif de fermeture (2) est mis dans l'état verrouillé sans possibilité de déverrouillage (VOF) lorsque la possibilité de mouvement du véhicule est mise dans l'état autorisé.

2. Procédé selon la revendication 1, **caractérisé en ce que** l'état autorisé de la possibilité de mouvement du véhicule est obtenu en désactivant un dispositif d'immobilisation (4) et/ou en activant une chaîne cinématique et l'état non autorisé de la possibilité de mouvement du véhicule est obtenu en activant un dispositif d'immobilisation (4) et/ou en désactivant la chaîne cinématique.

3. Procédé selon la revendication 2, **caractérisé en ce que** l'activation du dispositif d'immobilisation (4) s'effectue en activant un frein de parking ou de stationnement et/ou en réglant une position de levier sélecteur, qui prend au moins les états de stationnement et de non stationnement, à l'état de stationnement, et la désactivation du dispositif d'immobilisation (4) s'effectue en désactivant un frein de parking ou de stationnement et/ou en réglant la position du levier sélecteur à l'état de non stationnement.

4. Procédé selon l'une des revendications précédentes, **caractérisé en ce que** le dispositif de verrouillage (2) est mis dans l'état verrouillé avec possibilité de déverrouillage (VMF) lorsque la possibilité de mouvement du véhicule est mise dans un état non autorisé.

5. Procédé selon l'une des revendications précédentes, **caractérisé en ce que** le dispositif de fermeture (2) prend en outre l'état déverrouillé avec possibilité de verrouillage (EMF), dans lequel le dispositif de fermeture (2) peut uniquement être amené à passer de l'état verrouillé avec possibilité de déverrouillage (VMF) à l'état déverrouillé avec possibilité de verrouillage (EMF).

6. Procédé selon la revendication 5, **caractérisé en ce que**, lorsque le dispositif de fermeture (2) passe à l'état verrouillé avec possibilité de déverrouillage (VMF), la mise du dispositif de fermeture (2) dans l'état déverrouillé avec possibilité de déverrouillage (EMF) est effectuée au moyen d'un signal de déverrouillage du dispositif de fermeture (2), dans lequel le signal de déverrouillage du dispositif de verrouillage (2) est généré par l'actionnement d'un générateur de signal de déverrouillage ou par un signal de déverrouillage provenant d'une unité de verrouillage centralisée (6) du véhicule.

7. Procédé selon l'une des revendications 5 ou 6, **caractérisé en ce que**, lorsque le dispositif de verrouillage (2) passe dans l'état déverrouillé avec possibilité de verrouillage (EMF) et lorsque la possibilité de mouvement du véhicule est mise dans l'état autorisé, le dispositif de verrouillage (2) est mis dans l'état verrouillé sans possibilité de déverrouillage (VOF).

8. Procédé selon l'une des revendications 5 à 7, **caractérisé en ce que**, lorsque le dispositif de fermeture (2) prend l'état déverrouillé avec possibilité verrouillage (EMF), la mise du dispositif de fermeture (2) dans l'état verrouillé avec possibilité de déverrouillage (VMF) est effectuée par un signal de verrouillage du dispositif de fermeture (2), dans lequel le signal de verrouillage du dispositif de verrouillage (2) est généré par l'actionnement d'un générateur de signal de verrouillage ou par un signal de verrouillage provenant d'une unité de verrouillage centralisée (6) du véhicule, dans lequel le signal de verrouillage du dispositif de verrouillage peut être généré par l'unité centrale de verrouillage (6) en étant également retardé d'un intervalle de temps défini.

9. Procédé selon l'une des revendications 5 à 8, **caractérisé en ce que** le dispositif de fermeture (2) prend en outre l'état déverrouillé sans possibilité de verrouillage (EOF), dans lequel le dispositif de verrouillage (2) peut uniquement être amené à passer de l'état déverrouillé avec possibilité de verrouillage (EMF) à l'état déverrouillé sans possibilité de verrouillage (EOF) et **en ce que**, lorsque le dispositif de verrouillage (2) prend l'état déverrouillé sans possibilité de verrouillage (EOF), le passage de la possibilité de mouvement du véhicule dans l'état autorisé n'est pas possible.

10. Procédé selon la revendication 9, **caractérisé en ce que** le dispositif de fermeture (2) est amené à passer à l'état déverrouillé sans possibilité de verrouillage (EOF) en ouvrant le dispositif de fermeture (2) lorsque le dispositif de fermeture (2) passe dans l'état déverrouillé avec possibilité de verrouillage (EMF), dans lequel l'ouverture du dispositif de verrouillage (2) est détectée et communiquée par l'intermédiaire d'un capteur de dispositif de verrouillage qui prend au moins l'état ouvert.

11. Procédé selon l'une des revendications 9 ou 10, **caractérisé en ce que** le dispositif de fermeture (2) est passe dans l'état déverrouillé avec possibilité de verrouillage (EMF) en fermant le dispositif de fermeture (2) lorsque le dispositif de fermeture (2) passe dans l'état déverrouillé sans possibilité de verrouillage (EOF), dans lequel la fermeture du dispositif de fermeture (2) est détectée et communiquée par l'intermédiaire d'un capteur du dispositif de fermeture qui prend au moins l'état ouvert.

12. Dispositif de commande d'une possibilité de mouvement d'un véhicule et/ou d'un dispositif de verrouillage (2) qui ferme au moins une interface du véhicule servant à la réception de dispositifs d'alimentation externes, dans lequel une réception des dispositifs d'alimentation externes ne peut être effectuée que lorsque le dispositif de fermeture (2) est ouvert, dans lequel la possibilité de mouvement du véhicule peut prendre au moins les états autorisé et non autorisé, dans lequel le dispositif de fermeture (2) peut prendre au moins les états verrouillé sans possibilité de déverrouillage (VOF) et verrouillé avec possibilité de déverrouillage (VMF), dans lequel l'état du dispositif de fermeture (2) peut être modifié en fonction d'au moins un état de la possibilité de mouvement du véhicule et/ou l'état de la possibilité de mouvement du véhicule peut être modifié en fonction d'au moins un état du dispositif de fermeture (2), comprenant au moins un dispositif de fermeture (2) pouvant être commandé qui actionne au moins un mécanisme de verrouillage d'une serrure, et au moins une unité (3) servant à commander la possibilité de mouvement du véhicule, dans lequel l'unité (3) et le dispositif de fermeture (2) sont reliés entre eux par transmission de données, dans lequel, lorsque la possibilité de mouvement du véhicule est mise dans l'état autorisé, le dispositif de fermeture (2) est mis dans l'état verrouillé sans possibilité de déverrouillage (VOF).
